# EUROPÄISCHE PATENTSCHRIFT

(11) **EP 1 246 670 B1**
(45) Veröffentlichungstag und Bekanntmachung des Hinweises auf die Patenterteilung: **28.11.2007**
(21) Anmeldenummer: 00987463.7
(22) Anmeldetag: 27.12.2000
(51) Int. Cl.: A63B 49/10, B29C 70/44, B29D 31/00

(54) **PROFILKÖRPER ZUR HERSTELLUNG VON SPORTGERÄTEN UND VERFAHREN ZUR HERSTELLUNG DES PROFILKÖRPERS**
SHAPED BODY FOR PRODUCTION OF SPORTS EQUIPMENT AND METHOD FOR PRODUCTION OF SAID SHAPED BODY
CORPS PROFILE POUR LA PRODUCTION D'ARTICLES DE SPORT ET PROCEDE DE PRODUCTION DUDIT CORPS PROFILE

(30) Priorität: 27.12.1999 DE 19963241
(43) Veröffentlichungstag der Anmeldung: 09.10.2002
(73) Patentinhaber: Sommer, Roland, 65824 Schwalbach/Taunus (DE)
(72) Erfinder: Sommer, Roland, 65824 Schwalbach/Taunus (DE)
(74) Vertreter: Luderschmidt, Schüler & Partner
(86) Internationale Anmeldenummer: PCT/EP2000/013285
(87) Internationale Veröffentlichungsnummer: WO 2001/047605

(56) Entgegenhaltungen:
- EP-A- 0 235 777
- DE-A- 2 621 062
- DE-A- 2 741 741
- DE-A- 3 922 701
- GB-A- 1 434 741
- US-A- 2 878 020
- US-A- 3 949 988
- US-A- 4 357 013
- US-A- 5 454 562

## Beschreibung

Die Erfindung betrifft einen Profilkörper zur Herstellung von Sportgeräten, insbesondere Sportschläger wie Tennis-, Squash-, Badminton-, Golf-, Hockey-, Eishockey- und Baseballschläger, sowie ein Verfahren zur Herstellung des Profilkörpers.

Bei Ballsportarten, zu deren Ausübung ein Schläger benötigt wird, ist bekannt, daß erhebliche Schockimpulse und resonanzbedingte Vibrationen als Reaktion auf den Zusammenprall zwischen Schläger und Ball entstehen. Die ausgeprägten Vibrationen stellen ein großes Gesundheitsrisiko für den Arm, die Schulter und die Wirbelsäule des Spielers dar. So ist z. B. der sogenannte Tennisarm bekannt, bei dem es aufgrund des Schwingungsverhaltens des Schlägers zu einer starken Steigerung des lokalen Gewebestoffwechsels sowie der Leukozytenwanderung im Gewebe kommt. Der Tennisarm ist sehr häufig zu beobachten und bereitet dem Tennisspieler starke Schmerzen.

Die herkömmlichen Sportschläger neigen nach dem Zusammenprall mit dem Ball zu einem nachteiligen Schwingungsverhalten, das besonders hohe Energieimpulse erzeugt. Die bekannten Tennisschläger sind dabei derart ausgebildet, daß sich im Bereich des Griffes und somit im Bereich der Spielerhand ein Amplitudenmaximum ergibt.

Die deutsche Gebrauchsmusterschrift DE 29805032 U1 beschreibt einen Schlägerrahmen für einen Tennis-, Badminton- oder Squashschläger. Der bekannte Rahmen wird von einem einzelnen rohrförmigen faserverstärkten Kunststoff gebildet. Das rohrförmige Kunststoffteil weist einen elliptischen Querschnitt auf, dessen Längsseiten mit einer oder zwei Querstreben verbunden sind, wodurch sich innerhalb des einzelnen Kunststoffteiles Kammern ausbilden. Bei zwei Stegen bildet sich eine mittlere Kammer aus, die einen geschäumten Körper aufnimmt. Aufgrund der elliptischen Ausbildung des Querschnittes weist das Kunststoffteil in seinem mittleren Bereich, durch den die Saiten der Bespannung durch Bohrungen geführt werden, die größte Breite auf, wodurch im Mittelteil die größte Massenkonzentration auftritt.

Aus der amerikanischen Patentschrift US 5,516,100 ist ferner ein Rahmen für einen Schläger bekannt, der aus einem einzelnen rohrförmigen Profilelement gebogen wird, das einen bohnenförmigen Querschnitt aufweist. In dem einzelnen Profilelement ist eine Verstärkungsrippe vorgesehen, die die beiden Längsseiten des bohnenförmigen Querschnittes verbindet. In der Verstärkungsrippe ist ein Saitenführungsstreifen eingebettet, der Hülsen zum Durchführen der Saiten der Bespannung bereitstellt.

Die AT 388 106 beschreibt einen Rahmen für Ballschläger, der aus einem Mittelstreifen und an den Mittelstreifen beiderseits angeformten Hohlprofilen aufgebaut ist. Der Mittelstreifen besteht aus einem Thermoplast, Duroplast, Elastomer, Kautschuk, Keramik, Holz, Metall o. ä.

Auch die US 2 878 020 beschreibt einen Rahmen für Ballschläger.

Die US 4,357,013 beschreibt eine Struktur für einen Tennisschlägerrahmen, die aus zwei äußeren Körpern mit Wabenstruktur und einem dazwischenliegenden Kern aufgebaut ist. Die beiden Körper und der Kern werden von einer gemeinsamen Hülle umschlossen. Der Kern wird dabei von einem spiralförmig aufgerollten und beschichteten Kunststoffbogen gebildet.

Die vorbeschriebenen Rahmenkonstruktionen nach dem Stand der Technik führen beim Zusammenprall des Balles mit der Bespannung oder dem Rahmen selbst zu einem nachteiligen Schwingungsverhalten des Schlägers, wobei das Schwingungsverhalten zu körperlichen Schäden, wie z. B. dem Tennisarm, führt.

Der vorliegenden Erfindung liegt somit die Aufgabe zugrunde, einen Profilkörper zur Herstellung eines Sportgerätes, insbesondere Sportschläger wie Tennis-, Squash-, Badminton-, Golf-, Hockey-, Eishockey- und Baseballschläger, zu schaffen, der ein günstiges Schwingungsverhalten aufweist und somit kein Gesundheitsrisiko für den Spieler darstellt, ohne die Gesamtmasse des Sportgerätes zu erhöhen und dessen Festigkeit zu verringern. Darüber hinaus besteht die Aufgabe darin, ein Verfahren anzugeben, das die Herstellung eines solchen Profilkörpers ermöglicht.

Die erfindungsgemäßen Aufgaben werden mit den Merkmalen der unabhängigen Patentansprüche 1 bzw. 13 gelöst. Vorteilhafte Weiterbildungen der Erfindung sind Gegenstand der Unteransprüche.

Der erfindungsgemäße Profilkörper zur Herstellung eines Sportgerätes weist zwei parallel verlaufende rohrförmige Resonanzkörper auf. Die Resonanzkörper können einen beliebigen Querschnitt aufweisen und sind im Abstand zueinander angeordnet. Beide Resonanzkörper sind von einer gemeinsamen Hülle umschlossen, wobei ein Distanzkörper derart zwischen den Resonanzkörpern angeordnet ist, daß diese gekoppelt sind. Die Druckfestigkeit des Distanzkörpers ist in verschiedenen Richtungen unterschiedlich, wobei die Druckfestigkeit in Richtung einer die Mittelpunkte der Resonanzkörper verbindenden Achse am größten ist. Somit verläuft die Richtung der größten Druckfestigkeit quer zur Längsachse der Resonanzkörper, wobei die Richtung jeweils zu den Resonanzkörpern weist. Der Distanzkörper schafft somit eine Kopplung zwischen zwei schwingungsfähigen Systemen, die jeweils von einem Resonanzkörper gebildet werden, und ist ebenfalls von der gemeinsamen Hülle umschlossen. Jeder einzelne der beiden Resonanzkörper weist eine Masse auf, die größer als die Masse des Distanzkörpers ist.

Im Gegensatz zum Stand der Technik, weist der erfindungsgemäße zwei rohrförmige Resonanzkörper auf, die jeweils ein schwingungsfähiges System bereitstellen, wobei die beiden schwingungsfähigen Systeme über einen

Distanzkörper gekoppelt sind, dessen Druckfestigkeit in Richtung einer die Mittelpunkte der Resonanzkörper verbindenden Achse am größten ist. Die Kopplung der beiden Resonanzkörper, deren einzelne Masse jeweils größer als die Masse des Distanzkörpers ist, durch diesen Distanzkörper bewirkt, daß sich die Schwingungen der einzelnen Resonanzkörper vorteilhaft überlagern. So liegt z. B. bei einem Tennisschläger, der aus dem erfindungsgemäßen Profilkörper hergestellt wurde, das Amplitudenmaximum nach dem Aufprall des Balles nicht mehr im Bereich des Griffes und somit nicht im Bereich der Hand des Spielers. Auf diese Weise wird der Arm des Spielers entlastet und die Gefahr der Ausbildung eines Tennisarmes beseitigt. Die durch den erfindungsgemäßen Profilkörper erreichte Verlagerung der Masse aus dem zentralen Bereich des Distanzkörpers in die äußeren Resonanzkörper bewirkt außerdem ein besseres Biegeverhalten des Profilkörpers um dessen Längsachse, da der außenliegende hochbelastetete Zug-/Druck-Bereich vergrößert wird.

Darüber hinaus ist eine größere Druckfestigkeit des Distanzkörpers quer zur Längsachse notwendig, um den Abstand zwischen den Resonanzkörpern auch unter extremen Bedingungen einzuhalten, wie sie z. B. beim Preßvorgang auftreten. Im letztgenannten Fall ist diese große Maßbeständigkeit sehr wichtig, da der Distanzkörper dem Innenpreßdruck in den beiden Resonanzkörpern standhalten muß. Senkrecht zur Achse, die die Mittelpunkte der Resonanzkörper verbindet, ist der Distanzkörper vorzugsweise teilelastisch verformbar, wodurch beim mechanischen Preßvorgang zum einen eine Angleichung an die Profilkörperkontur möglich ist und zum anderen der notwendige Innenpreßdruck entsteht.

Aus dem erfindungsgemäßen Profilkörper kann beispielsweise ein Tennisschläger mit einem geringen Gewicht hergestellt werden, das geringer als 290g ist. Darüber hinaus ist die Resonanzfrequenz dieses spielfertigen Schlägers größer als 170Hz und die Steifigkeit beträgt mindestens RA 70.

In einer vorteilhaften Ausführungsform des erfindungsgemäßen Profilkörpers besteht der Distanzkörper aus Holz oder einem holzartigen Werkstoff, d. h. einem Werkstoff mit einer Vorzugsrichtung. Der Resonanzkörper kann auch aus Sperrholz oder mehrschichtigem oder laminierten Holz mit einer Vorzugsrichtung, aber auch aus Preßholz bestehen.

In einer besonders vorteilhaften Ausführungsform des erfindungsgemäßen Profilkörpers besteht der Distanzkörper aus Balsaholz. Im Falle des Balsaholzes wird der Distanzkörper derart angeordnet, daß die Fasern des Balsaholzes parallel zu der Achse verlaufen, die die Mittelpunkte der Resonanzkörper verbindet. Das Balsaholz erfüllt die o. g. Anforderungen an den Distanzkörper, wobei es gleichzeitig eine geringe Dichte und der Distanzkörper somit ein geringes Gewicht aufweist. Außerdem kann auf eine Kunststoffüllung verzichtet und somit ein Beitrag zur Umweltfreundlichkeit im Sportschlägerbau geleistet werden. Sollte ein laminiertes Holz zum Einsatz kommen, so verläuft dessen Vorzugsrichtung parallel zu der Achse, die die Mittelpunkte der Resonanzkörper verbindet.

Es gibt noch weitere Holzarten, wie beispielsweise Kork, die sich als Material für den Distanzkörper eignen. Darüber hinaus kommen auch andere Materialien in Frage, wie z. B. waben-, wellen- oder röhrenförmige Werkstoffe aus Aluminium, Papier und bestimmten mit hoher Temperatur belastbaren Kunststoffen.

In einer vorteilhaften Ausführungsform des erfindungsgemäßen Profilkörpers ist die Breite der Resonanzkörper größer als die Breite des Distanzkörpers, so daß sich der Profilkörper im Bereich des Distanzkörpers verjüngt. Der Distanzkörper ist lediglich derart ausgelegt, daß die Kräfte durch die Bespannung aufgenommen und die Resonanzkörper gekoppelt werden.

In einer weiteren vorteilhaften Ausführungsform des erfindungsgemäßen Profilkörpers weist die Hülle an der Seite der Resonanzkörpers, die dem gegenüberliegenden Resonanzkörper abgewandt ist, eine größere Wandstärke auf.

Mit einer solchen Ausbildung der Hülle ist ein Großteil der Masse des Profilkörpers in dem Bereich der Resonanzkörper angeordnet und somit nicht mehr im Zentrum des Profilkörpers. Durch die größere Wandstärke wird ein größerer Widerstand gegen eine Biegung um die Längsachse des Profilkörpers erreicht.

In einer weiteren Ausführungsform des erfindungsgemäßen Profilkörpers ist die Hülle vorteilhafterweise ein- oder mehrlagig von mehreren kunststoffimprägnierten Flächenstoffen gebildet, wobei die Hülle an der Seite der Resonanzkörper, die dem gegenüberliegenden Resonanzkörper abgewandt ist, jeweils einen ersten Abschnitt mit mehreren übereinanderliegenden Flächenstoffen aufweist. Die ersten Abschnitte sind über zwei zweite Abschnitte verbunden, wobei sich die Flächenstoffe der ersten Abschnitte mit den Flächenstoffen der zweiten Abschnitte im Übergangsbereich überlappen. Die Flächenstoffe des ersten Abschnitts sind dicker und/oder zahlreicher als die Flächenstoffe des zweiten Abschnitts, so daß mehr Masse im Bereich der Resonanzkörper angeordnet ist.

Der kunststoffimprägnierte Flächenstoff besteht in einer weiteren vorteilhaften Ausführungsform der Erfindung aus GFK-, AFK-, CFK-, KFK-, MFK-Faserkunststoff mit Harzmatrix oder anderen Schichten, Geweben oder Folien aus Metall oder Kunststoff, die äußere Kräfte abfangen können.

In einer weiteren vorteilhaften Ausführungsform der Erfindung ist an der Wandung mindestens eines Resonanzkörpers mindestens ein Massenband mit Kammern angeordnet, in denen frei bewegliche Massenpartikel oder Flüssigkeitstropfen enthalten sind, die eine Dämpfung von Vibrationen und ein Abfangen des Rückstoßes eines Sportschlägers bewirken. Ein aus dem erfindungsgemäßen Profilkörper hergestellter Tennisschläger, weist einen Rahmen und einen Griff auf, wobei beide von einem Profilkörper gebildet werden, so daß sich in dem Rahmen und/oder dem Griff ein Massenband befindet. Somit kann die dämpfende Wirkung des Massenbandes auch im Bereich des Griffes genutzt werden.

Das erfindungsgemäße Verfahren zur Herstellung eines Profilkörpers umfaßt die Verfahrensschritte paralleles Anordnen zweier rohrförmiger Resonanzkörper unter Zwischenlage eines Distanzkörpers, wobei der Distanzkörper derart orientiert ist, daß die Richtung der höchsten Druckfestigkeit des Distanzkörpers parallel zu einer die Mittelpunkte der Resonanzkörper verbindenden Achse verläuft, Aufbringen von kunststoffimprägnierten Flächenstoffen, die die Resonanzkörper und den Distanzkörper nur teilweise umgeben, wobei jeder einzelne Flächenstoff mit einem anderen Flächenstoff nur im Bereich der Seite der Resonanzkörper überlappend angeordnet wird, die dem jeweils gegenüberliegenden Resonanzkörper abgewandt ist, Einbringen in eine Form unter Hitzeeinwirkung, Erzeugen eines mechanischen Drucks in den Resonanzkörpern und seitliches Verformen des Distanzkörpers mittels eines in der Form angeordneten Schiebers und Aushärten in der Form. Da die kunststoffimprägnierten Flächenstoffe die Resonanzkörper und den Distanzkörper nicht vollständig umschließen wird die Hülle aus mehreren streifenförmigen Flächenstoffen zusammengesetzt, wobei sich die Streifen überlappen. Auf diese Weise können Flächenstoffe mit unterschiedlichen Dicken an verschiedenen Stellen der Hülle eingesetzt werden, so daß eine sehr genaue Abstufung der Massenverteilung über die Hülle vorgenommen werden kann. So besteht die Möglichkeit, an der Seite der Resonanzkörper, die dem jeweils gegenüberliegenden Resonanzkörper abgewandt ist, jeweils dickeren Flächenstoffe oder auch mehr Flächenstoffe als an den anderen Seiten einzusetzen, so daß die Masse dort größer ist. Bei den Verfahren nach dem Stand der Technik ist dies nicht möglich, da der Flächenstoff als eine Bahn im Wickelverfahren aufgebracht wird, so daß eine Abstufung der Wandstärke nicht erreichbar ist.

In einer besonders vorteilhaften Ausführungsform des erfindungsgemäßen Verfahrens wird der Distanzkörper nach dem seitlichen Verformen des Distanzkörpers und vor bzw. während des Aushärtens punktuell seitlich durchstoßen, wobei die Fasern der Hülle verdrängt und nicht zerstört werden. Die dadurch entstehenden durchgehenden Ausnehmungen dienen der Aufnahme der Saiten der Bespannung. Dadurch, daß die Fasern der Hülle nicht zerstört werden, wie dies bei den Verfahren nach dem Stand der Technik durch Bohren nach dem Aushärten geschieht, bleibt die Festigkeit in diesem Bereich weitgehend erhalten.

In weiteren bevorzugten Ausführungsformen des erfindungsgemäßen Verfahrens wird die Hülle und der Distanzkörper in der Form mittels eines Doms von einer Seite durchstoßen oder werden zwei Dorne von gegenüberliegenden Seiten durch die Hülle in den Distanzkörper gestoßen bis sich deren Stirnseiten im Distanzkörper berühren. Die dadurch entstandenen durchgehenden Ausnehmungen dienen z. B. der Aufnahme der Saiten einer Bespannung.

Im folgenden wird die Erfindung anhand von Ausführungsbeispielen unter Bezugnahme auf die beigefügten Figuren näher erläutert.

Es zeigen:

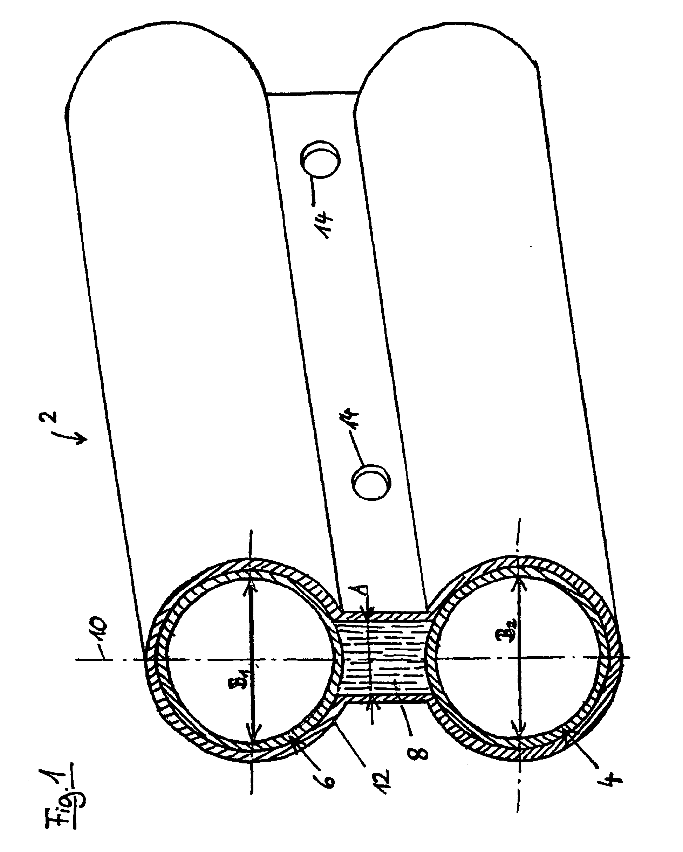

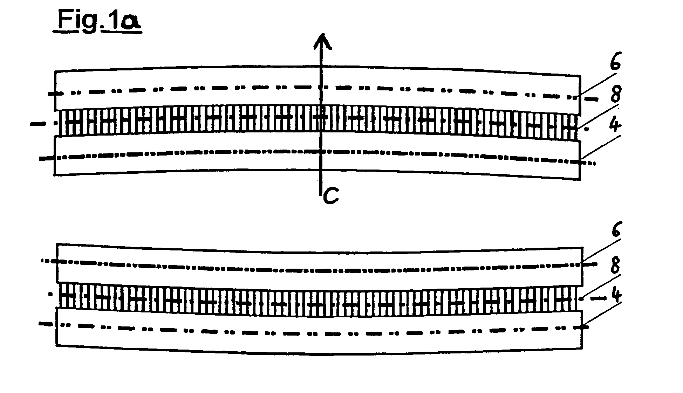

- Fig. 1: eine perspektivische Darstellung des erfindungsgemäßen Profilkörpers in einer einfachen ersten Ausführungsform,
- Fig. 1 a: das Funktionsprinzip des erfindugsgemäßen Profilkörpers am Beispiel der ersten einfachen Ausführungsform von Fig. 1,
- Fig. 2: die Querschnittsfläche des erfindungsgemäßen Profilkörpers in einer zweiten Ausführungsform,
- Fig. 3: eine Darstellung des erfindungsgemäßen Verfahrens in einer ersten Ausführungsform,
- Fig. 4: eine Darstellung des erfindungsgemäßen Verfahrens in einer zweiten Ausführungsform,
- Fig. 5: eine Darstellung des erfindungsgemäßen Verfahrens in einer dritten Ausführungsform,
- Fig. 6: eine Darstellung des Amplitudenverlaufs über die Länge eines Tennisschlägers mit einem Rahmen nach dem Stand der Technik und mit einem Rahmen aus dem erfindungsgemäßen Profilkörper,
- Fig. 7: das Frequenzspektrum eines Tennisschlägers mit Bespannung nach dem Stand der Technik,
- Fig. 8: das Frequenzspektrum des erfindungsgemäßen Tennisschlägers mit Bespannung bei schwacher Erregung,
- Fig. 9: das Frequenzspektrum des erfindungsgemäßen Tennisschlägers ohne Bespannung bei starker Erregung,
- Fig. 10: das Resonanzspektrum nur eines Resonanzkörpers nach dem Stand der Technik und
- Fig. 11: das Resonanzspektrum zweier gekoppelter Resonanzkörper gemäß der Erfindung.

Fig. 1 zeigt eine perspektivische Darstellung des erfindungsgemäßen Profilkörpers in einer einfachen ersten Ausführungsform. Der Profilkörper 2 weist zwei rohrförmige Resonanzkörper 4,6 auf, die parallel und im Abstand zueinander angeordnet sind. Zwischen den Resonanzkörpern 4,6 ist ein an die Resonanzkörper 4,6 angrenzender Distanzkörper 8 vorgesehen, der die beiden schwingungsfähigen Systeme in Form der Resonanzkörper 4,6 koppelt. Der Distanzkörper 8 erstreckt sich zwischen den Resonanzkörpern 4,6 über die gesamte Länge des Profilkörpers 2 und weist eine Breite A auf, die kleiner als eine Breite B₁,B₂ der Resonanzkörper 4,6 ist, so daß auch durch die Dimensionierung das Massenverhältnis zwischen jedem Resonanzkörper 4,6 und dem Distanzkörper 8 größer als 1 ist. Darüber hinaus besteht der Distanzkörper 8 aus Balsaholz, das lediglich eine geringe Dichte aufweist. Der Distanzkörper 8 hat seine größte Druckfestigkeit in Richtung einer die Mittelpunkte der beiden Resonanzkörper verbindenden Achse 10, so daß die Fasern des Balsaholzes in Richtung der Achse 10 angeordnet sind. Die beiden Resonanzkörper 4,6 und der dazwischen angeordnete Distanzkörper 8 sind von einer gemeinsamen Hülle 12 umgeben. Der Profilkörper 2 weist über dessen gesamte Länge jeweils im Bereich des Distanzkörpers 8 durchgehende Ausnehmungen 14 auf, die in bestimmten Abständen aufeinander folgen. Die Ausnehmungen 14 erstrecken sich quer zur Achse 10 durch den Distanzkörper 8 sowie durch die den Distanzkörper 8 seitlich umgebenden Bereiche der Hülle 12. Die Ausnehmungen 14 dienen der Aufnahme von Saiten (nicht dargestellt) einer Bespannung falls der Profilkörper 2 zur Herstellung eines Tennisschlägerrahmens eingesetzt werden soll.

Fig. 1a zeigt das Funktionsprinzip des erfindugsgemäßen Profilkörpers am Beispiel der ersten Ausführungsform von Fig. 1. In Fig. 1a sind zwei Seitenansichten des Profilkörpers von Fig. 1 ohne Hülle dargestellt. Wird der in Fig. 1a oben dargestellte Profilkörper in Richtung des Pfeiles C ausgelenkt bzw. gebogen, so treten aufgrund der Kopplung der beiden Resonanzkörper 4,6 durch den Distanzkörper 8 in dem oberen Resonanzkörper 6 Zugspannungen und in dem unteren Resonanzkörper 8 Druckspannungen auf. Wird die Belastung in Richtung des Pfeiles C aufgehoben, so schwingt der Profilkörper aus der Auslenkung zurück und gerät in den in Fig. 1a unten dargestellten Zustand., bei dem der zuvor zugbelastete Resonanzkörper 6 gestaucht und der zuvor druckbelastete Resonanzkörper 4 gestreckt. Im Laufe der Schwingung wechseln sich diese Zustände ab. Der Distanzkörper 8 fungiert als neutrale Faser, so daß dieser weitgehend von Biegezug-Biegedruckspannungen frei ist. Somit wird der Distanzkörper 8 lediglich in Richtung der in Fig. 1 dargestellten Achse 10 druckbelastet, um die Auslenkung des einen Resonanzkörpers 4,6 auf den anderen Resonanzkörper 6,4 zu übertragen. Durch die Kopplung der Resonanzkörper 4,6 werden deren Resonanzfrequenzen überlagert und es entsteht eine resultierende Hauptfrequenz, die aber keine Resonanzfrequenz darstellt. Für den Fall, daß die Resonanzkörper nicht miteinander gekoppelt sind, schwingen diese mit einer bestimmten Resonanzfrequenz ähnlich einer gespannten Saite. Die Kopplung der Resonanzkörper bewirkt nun, daß die Schwingungen des einen Körpers die Schwingungen des anderen Körpers derart beeinflussen, daß es zu Phasenverschiebungen und damit zu den genannten Effekten kommt. Die Resonanzkörper stellen zusammen mit dem Distanzkörper ein stark gedämpftes System dar, wobei die Dämpfung von den Materialeigenschaften abhängig ist.

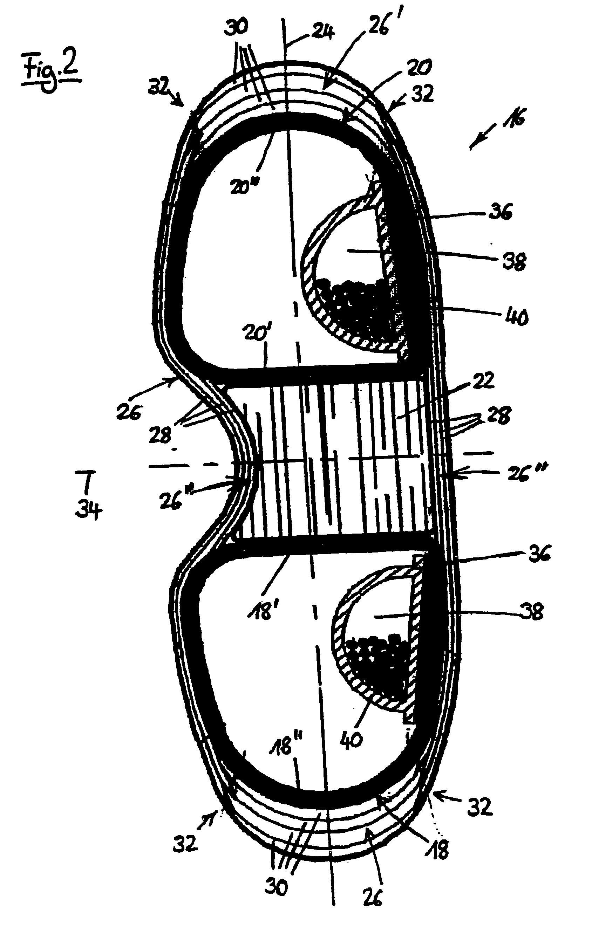

Fig. 2 zeigt die Querschnittsfläche des erfindungsgemäßen Profilkörpers in einer zweiten Ausführungsform. Der Profilkörper 16 weist zwei rohrförmige Resonanzkörper 18,20 auf, die parallel und im Abstand zueinander angeordnet sind. Zwischen den Resonanzkörpern 18,20 ist ein angrenzender Distanzkörper 22 vorgesehen, der aus Balsaholz besteht, dessen Fasern sich parallel zu einer die Mittelpunkte der Resonanzkörper 18,20 verbindenden Achse 24 erstrecken, so daß die Richtung der größten Druckfestigkeit des Distanzkörpers 22 zu den Resonanzkörpern weist. Wie schon in der ersten Ausführungsform hat der Distanzkörper 22 eine geringere Breite als jeder einzelne Resonanzkörper 18,10, so daß sich der Querschnitt des Profilkörpers 16 in der Mitte verjüngt. Die Masse jedes einzelnen Resonanzkörpers 18,20 ist größer als die Masse des Distanzkörpers 22.

Die Resonanzkörper 18,20 sind an ihren einander zugewandten Seiten 18',20' eben ausgebildet, so daß der Distanzkörper 22 gleichmäßig zu Anlage kommt. Die dem jeweils gegenüberliegenden Resonanzkörper abgewandten Seiten 18",20" der Resonanzkörper 18,20 sind nach außen gewölbt und schmaler als die Seiten 18',20', so daß sich der Querschnitt der Resonanzkörper18,20 ausgehend von dem Distanzkörper 22 nach außen verjüngt.

Die beiden Resonanzkörper 18,20 und der dazwischen angeordnete Distanzkörper 22 sind von einer gemeinsamen Hülle 26 umgeben. Die Hülle 26 setzt sich aus zwei ersten Abschnitten 26'und zwei zweiten Abschnitten 26" zusammen. Die ersten Abschnitte 26' sind jeweils an den Seiten 18",20" der Resonanzkörper 18,20 angeordnet, die dem gegenüberliegenden Resonanzkörper 20,18 abgewandt sind, und setzen sich aus mehrlagig übereinander angeordneten kunststoffimprägnierten Flächenstoffen 30 zusammen. Die zweiten Abschnitte 26" verlaufen im wesentlichen in Richtung der Achse 24 und verbinden die ersten Abschnitte 26' miteinander. Die zweiten Abschnitte 26" setzen sich ebenfalls aus mehrlagig übereinander angeordneten kunststoffimprägnierten Flächenstoffen 28 zusammen, wobei die Flächenstoffe 30 der ersten Abschnitte 26' dicker sind. Außerdem sind in den ersten Abschnitten 26' mehr Flächenstoffe vorgesehen, so daß der größere Teil der Masse zu den einander abgewandten Seiten 18",20" der Resonanzkörper 18,20 verlagert und die Wandstärke der Hülle 26 in diesem Bereich stärker ausgebildet ist. In Übergangsbereichen 32, in denen die ersten mit den zweiten Abschnitten 26',26" verbunden sind, sind die einzelnen Flächenstoffe 30 der ersten Abschnitte 26' mit den Flächenstoffen 28 der zweiten Abschnitte 26" überlappend angeordnet. Des weiteren ist der Querschnitt des Profilkörpers 16 in Richtung einer Querachse 34 im Bereich des Distanzkörpers 22 unter Zusammendrücken desselben auf einer Seite verjüngt.

An der Wandung beider Resonanzkörper 18,20 ist ein Massenträgerband 36 angeordnet. Die Massenträgerbänder 36 weisen einzelne Kammern 38 auf, in denen frei bewegliche Massenteilchen 40 aufgenommen sind, die eine Dämpfung von Vibrationen und ein Abfangen des Rückstoßes eines Sportschlägers bewirken.

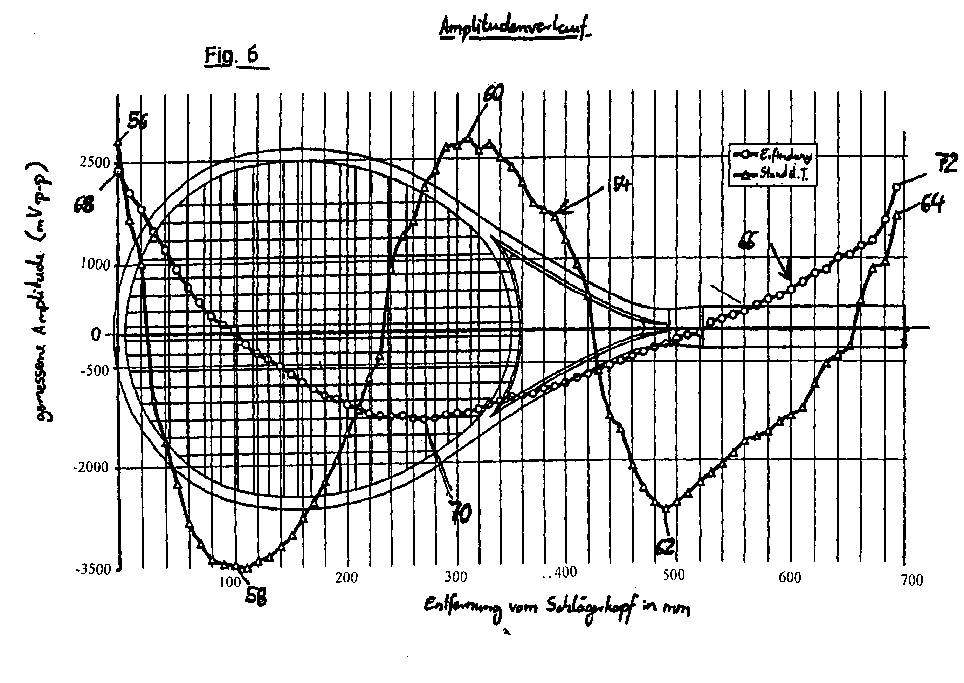

Die Vorteile des erfindungsgemäßen Profilkörpers aus den Fig. 1 und 2 wird später unter Bezugnahme auf die Fig. 6 bis 11 diskutiert.

Fig. 3 zeigt eine Darstellung des erfindungsgemäßen Verfahrens in einer ersten Ausführungsform. Zuerst werden die beiden Resonanzkörper 18,20 unter Zwischenlage des Distanzkörpers 22 parallel angeordnet, wobei der Distanzkörper 22 derart orientiert ist, daß die Richtung der höchsten Druckfestigkeit des 22 parallel zu der die Mittelpunkte der Resonanzkörper 18,20 verbindenden Achse 24 verläuft. Im Falle eines Distanzkörpers 22 aus Balsaholz weisen die Fasern des Balsaholzes in Richtung der angrenzenden Resonanzkörper 18,20. Im Anschluß daran werden kunststoffimprägnierte Flächenstoffe aufgebracht, die die Resonanzkörper 18,20 und den Distanzkörper 22 nur teilweise umgeben und sich nur im Bereich der Seiten 18",20" der Resonanzkörper 18,20 überlappen (Fig. 2). Anschließend wird der Rohling in eine Form 42 aus zwei Formhälften 44,46 eingebracht, wobei diese Form erhitzt wird. Dann wird innerhalb der Resonanzkörper 18,20 ein mechanischer Druck erzeugt, der die Resonanzkörper 18,20 aufweitet und die die Hülle bildenden Flächenstoffe gegen die Wandung der Formhälften 44,46 preßt. Ein derartiger Innendruck kann beispielsweise über Druckschläuche in den Resonanzkörpern 18,20 erzeugt werden. Aufgrund der hohen Druckfestigkeit des Distanzkörpers 22 in Richtung der Achse 24 vermag der Druck nicht, den Distanzkörper 22 wesentlich zu stauchen. Gleichzeitig wird der Distanzkörper 22 seitlich über einen in der Formhälfte 46 angeordneten Schieber 48 eingedrückt, so daß der Profilkörper in der Mitte verjüngt ist. Der Distanzkörper 22 wird dadurch zum Teil seitlich verformt, leistet aber auch den notwendigen Gegendruck, der beim Pressen notwendig ist. Anschließend härtet der derart geformte Profilkörper in der Form aus.

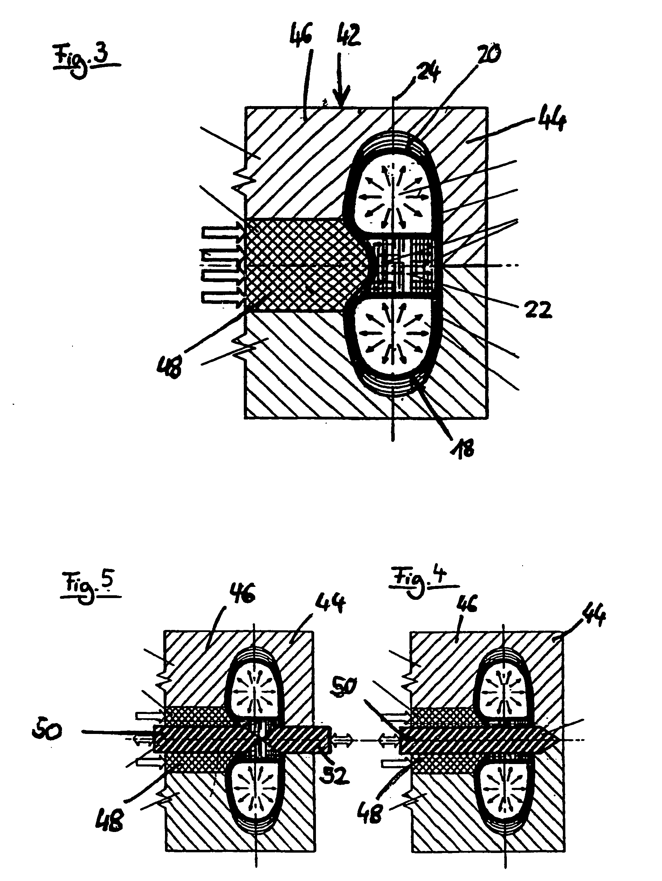

Die Fig. 4 und 5 zeigen eine Darstellung des erfindungsgemäßen Verfahrens in einer zweiten und dritten Ausführungsform. Beiden Verfahren ist gemein, daß die Hülle und der Distanzkörper 22 nach dem seitlichen Verformen durch den Schieber 48 und vor bzw. während des Aushärtens seitlich punktuell durchstoßen werden, um eine durchgehende Ausnehmung für die Saiten einer Bespannung zu schaffen, ohne die Festigkeit in diesem Bereich zu stark herabzusetzen. Das Durchstoßen erfolgt mittels eines Doms, der derart ausgebildet ist, daß die Fasern der Hülle verdrängt und nicht zerstört werden.

Bei der zweiten Ausführungsform des erfindungsgemäßen Verfahrens (Fig. 4) ist innerhalb des Schiebers 48 ein verschiebbarer Dorn 50 angeordnet, der die Hülle und den Distanzkörper 22 des Profilkörpers 16 von einer Seite durchstößt. Bei der dritten Ausführungsform des erfindungsgemäßen Verfahrens (Fig. 5) wird einerseits der verschiebbare Dorn 50 und andererseits ein gegenüberliegender, in der Formhälfte 44 koaxial angeordneter Dorn 52 durch die Hülle und in den Distanzkörper 22 gestoßen, bis sich die Stirnseiten der Dorne 50,52 im Distanzkörper 22 berühren.

Fig. 6 zeigt eine Darstellung des Amplitudenverlaufs über die Länge eines Tennisschlägers mit einem Rahmen nach dem Stand der Technik und mit einem Rahmen aus dem erfindungsgemäßen Profilkörper. Der Rahmen nach dem Stand der Technik besteht aus einem einzigen rohrförmigen Teil, zu dessen Verstärkung ggf. innenliegende Rippen eingesetzt wurden. Darüber hinaus konzentriert sich die Masse des Rahmens im wesentlichen im Bereich des Mittelpunktes dessen Querschnitts. Der erfindungsgemäße Profilkörper ist in Fig. 2 dargestellt, wobei der wesentliche Unterschied darin besteht, daß gemäß der Erfindung zwei Resonanzkörper anstelle nur eines Resonanzkörpers vorgesehen sind, wobei die beiden Resonanzkörper miteinander gekoppelt sind. Darüber hinaus konzentriert sich gemäß der Erfindung die Masse nicht in der Mitte des Querschnittes. Der Amplitudenverlauf 54 bei dem bekannten Schläger weist über die Länge des Schlägers fünf Amplitudenmaxima 56,58,60,62,64 auf, wobei die Amplitudenmaxima 62 und 64 im Bereich des Schlägergriffes angeordnet sind. Somit ist die Hand und der Arm des Spielers einer großen Schwingungsamplitude ausgesetzt, die zum einen die Handhabung des Schlägers erschwert und zum anderen zu den eingangs beschriebenen Gesundheitsschädigungen führt, wie z. B. dem Tennisarm. Demgegenüber weist der Amplitudenverlauf 66 bei einem Schläger mit einem Rahmen aus dem erfindungsgemäßen Profilkörper lediglich drei Amplitudenmaxima 68,70,72 auf, wobei der Amplitudenverlauf 66 im Bereich des Schlägergriffes zeigt, daß der Griff an dem erfindungsgemäßen Schläger mit vergleichsweise geringer Amplitude schwingt. Auf diese Weise ist die Handhabung erleichtert, außerdem besteht eine geringere Gesundheitsgefährdung.

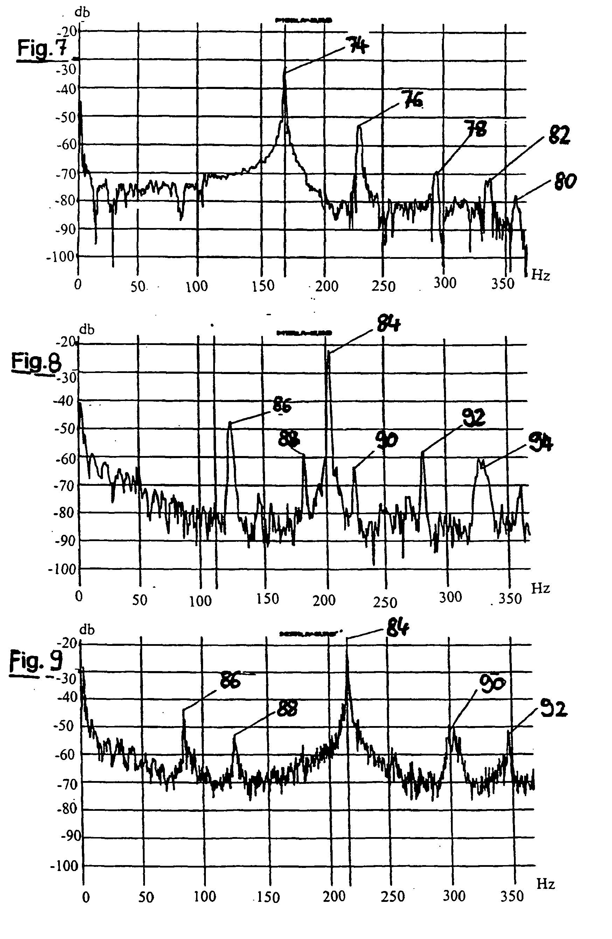

Fig. 7 zeigt das Frequenzspektrum eines herkömmlichen Tennisschlägers mit Bespannung, der gemäß dem Stand der Technik lediglich einen Resonanzkörper als Rahmen aufweist. Der bekannte Schläger zeigt eine ausgeprägte Resonanzfrequenz 74 sowie die für einen Rahmen mit nur einem Resonanzkörper üblichen harmonischen Oberwellen 76,78,80. Des weiteren ist die Frequenz 82 der schwingenden Saite zu erkennen.

Fig. 8 zeigt das Frequenzspektrum des erfindungsgemäßen Tennisschlägers mit Bespannung bei schwacher Erregung, d. h. die Erregung wurde mit geringer Kraft (Verbiegung) durchgeführt. Das Frequenzspektrum hat ebenfalls eine ausgeprägte meßbare resultierende Hauptfrequenz 84, die aber in diesem Falle das differentiale Mischprodukt zwischen den jeweils untersten Resonanzfrequenzen 86,88 sowie den obersten Resonanzfrequenzen 90,92 der beiden Resonanzkörper ist. Die Grundwelle weist also eine größere Frequenz als die Grundwelle bei einem herkömmlichen Schläger auf. Der Abstand zwischen der untersten und obersten Resonanzfrequenz 86,92 zur meßbaren resultierende Hauptfrequenz 84 ist dabei gering (geringe Verbiegung). Des weiteren ist die Schwingungsfrequenz 94 der Saite zu erkennen.

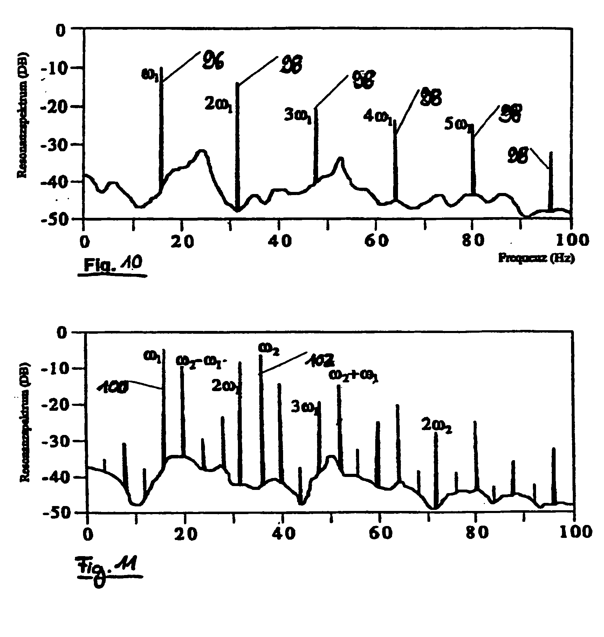

Fig. 9 zeigt das Frequenzspektrum des erfindungsgemäßen Tennisschlägers ohne Bespannung bei starker Erregung, das im wesentlichen dem Frequenzspektrum von Fig. 8 entspricht. Der Abstand zwischen den untersten und obersten Resonanzfrequenzen 86,92 zur meßbaren resultierenden Hauptfrequenz 84 ist allerdings größer (stärkere Verbiegung). Außerdem fehlt die Schwingungsfrequenz 94 der Saite, da der Schläger nicht bespannt ist, wobei das gesamte Frequenzspektrum aufgrund der geringeren Masse deutlich nach oben verschoben ist.

Fig 10 zeigt die Referenzdarstellung eines Frequenzspektrums einer einzigen sinusförmigen Resonanzfrequenz einer Teststruktur, die genau wie eine Schläger nach dem Stand der Technik als einzelner Resonanzkörper, auf einer einzigen Grundwelle (natürliche Frequenz) erregt, sinusförmig schwingt und im dargestellten Linienspektrum eine deutliche Ausbildung nur einer einzigen Grundwelle ω₁ 96 sowie regelmäßiger harmonischer Oberwellen 2ω₁ - 5ω₁ 98 zeigt.

Fig. 11 zeigt die Referenzdarstellung eines Frequenzspektrums für eine erfindungsgemäße Teststruktur mit zwei Resonanzkörpern. Das Spektrum zeigt eine deutliche Ausbildung von additiven sowie subtraktiven Mischfrequenzen zwischen den durch Mehrfachresonanz frequenzverschobenen Grundwellen ω₁ und ω₂ 100,102 der Teststruktur sowie deren Mischfrequenzen ω₂-ω₁ und ω₂+ω₁. Demzufolge hat ein Schläger nach der vorliegenden Erfindung keine einzelne konstante meßbare natürliche Frequenz , sondern mehrere variable Frequenzen, die je nach Belastungsfall der Struktur gleichzeitig mehrere Scheinresonanzen variabler Frequenz sowie deren Mischfrequenzen ausbilden.

## Patentansprüche

1. Profilkörper zur Herstellung eines Sportgerätes, insbesondere Tennis-, Squash-, Badminton-, Golf-, Hockey-, Eishockey- und Baseballschläger, mit zwei parallel verlaufenden rohrförmigen Resonanzkörpern (4,6,18,20), die im Abstand zueinander angeordnet und von einer gemeinsamen Hülle (12,26) umschlossen sind, und einem Distanzkörper (8,22), der zwischen den Resonanzkörpern (4,6,18,20) angeordnet ist,
**dadurch gekennzeichnet, daß** die Masse jedes Resonanzkörpers (4,6,18,20) größer als die Masse des Distanzkörpers (8,22) und die Druckfestigkeit des Distanzkörpers (8,22) in Richtung einer die Mittelpunkte der Resonanzkörper (4,6,18,20) verbindenden Achse (10,24) am größten ist.

2. Profilkörper zur Herstellung eines Sportgerätes nach Anspuch 1, **dadurch gekennzeichnet, daß** der Distanzkörper (8,22) aus Holz oder einem holzartigen Werkstoff besteht.

3. Profilkörper zur Herstellung eines Sportgerätes nach Anspruch 2, **dadurch gekennzeichnet, daß** der Distanzkörper (8,22) aus Balsaholz besteht.

4. Profilkörper zur Herstellung eines Sportgerätes nach einem der Ansprüche 1 bis 3, **dadurch gekennzeichnet, daß** die Breite (B₁,B₂) der Resonanzkörper (4,6,18,20) größer als die Breite (A) des Distanzkörpers (8,22) ist.

5. Profilkörper zur Herstellung eines Sportgerätes nach einem der Ansprüche 1 bis 4, **dadurch gekennzeichnet, daß** die Hülle (26) an der Seite (18",20") des Resonanzkörpers (18,20), die dem gegenüberliegenden Resonanzkörper (20,18) abgewandt ist, eine größere Wandstärke aufweist.

6. Profilkörper zur Herstellung eines Sportgerätes nach einem der Ansprüche 1 bis 5, **dadurch gekennzeichnet, daß** die Hülle (26) ein- oder mehrlagig von mindestens zwei kunststoffimprägnierten Flächenstoffen (28,30) gebildet ist.

7. Profilkörper zur Herstellung eines Sportgerätes nach Anspruch 6, **dadurch gekennzeichnet, daß** die Hülle (26) an der Seite (18",20") des Resonanzkörpers (18,20), die dem gegenüberliegenden Resonanzkörper (20,18) abgewandt ist, jeweils erste Abschnitte (26') aufweist, die über zwei zweite Abschnitte (26") verbunden sind, wobei die Flächenstoffe (30) der ersten Abschnitte (26') mit den Flächenstoffen (28) der zweiten Abschnitte (28) im Übergangsbereich (32) überlappend angeordnet sind.

8. Profilkörper zur Herstellung eines Sportgerätes nach Anspruch 7, **dadurch gekennzeichnet, daß** die Flächenstoffe (30) in den ersten Abschnitten (26') der Hülle (26) dicker als die Flächenstoffe (28) in den zweiten Abschnitten (26") der Hülle (26) sind und/oder daß in den ersten Abschnitten (26') mehr Flächenstoffe (30) als in den zweiten Abschnitten (26") angeordnet sind.

9. Profilkörper zur Herstellung eines Sportgerätes nach einem der Ansprüche 7 oder 8, **dadurch gekennzeichnet, daß** der kunststoffimpragnierte Flächenstoff (28,30) aus GFK-, AFK, CFK-, KFK-, MFK-Faserkunststoff mit Harzmatrix oder anderen Schichten, Geweben oder Folien aus Metall oder Kunststoff, die äußere Kräfte abfangen können, besteht.

10. Profilkörper zur Herstellung eines Sportgerätes nach einem der Ansprüche 1 bis 9, **dadurch gekennzeichnet, daß** in dem Distanzkörper (8,22) und der Hülle (12,26) seitlich durchgehende Ausnehmungen (14), insbesondere für die Saiten einer Bespannung, vorgesehen sind.

11. Sportgerät, insbesondere Tennis-, Squash-, Badminton-, Golf-, Hockey-, Eishockey- und Baseballschläger, das einen Profilkörper (2,16) nach einem der Ansprüche 1 bis 10 aufweist.

12. Tennisschläger mit Griff und Rahmen nach Anspruch 11, bei dem ein den Rahmen und/oder den Griff ausbildender Profilkörper (2,16) innerhalb mindestens eines Resonanzkörpers (18,20) frei bewegliche Massenteilchen oder Flüssigkeitstropfen, die auf den Profilkörper wirkende Rückstoßkräfte und Vibrationen dämpfen, oder alternativ ein Massenträgerband bzw. mehrere Massenträgerbänder (36) für kinetisch wirksame, dämpfende Massensysteme an der Wandung mindestens eines Resonanzkörpers (18,20) aufweist.

13. Verfahren zur Herstellung eines Profilkörpers für ein Sportgerät, insbesondere Tennis-, Squash-, Badminton-, Golf-, Hockey-, Eishockey- und Baseballschläger, mit den Verfahrensschritten
paralleles Anordnen zweier rohrförmiger Resonanzkörper unter Zwischenlage eines Distanzkörpers, wobei der Distanzkörper derart orientiert ist, daß die Richtung der höchsten Druckfestigkeit des Distanzkörpers parallel zu einer die Mittelpunkte der Resonanzkörper verbindenden Achse verläuft,
Aufbringen von kunststoffimprägnierten Flächenstoffen, die die Resonanzkörper und den Distanzkörper nur teilweise umgeben, wobei jeder einzelne Flächenstoff mit einem anderen Flächenstoff nur im Bereich der Seite der Resonanzkörper überlappend angeordnet wird, die dem jeweils gegenüberliegenden Resonanzkörper abgewandt ist,
Einbringen in eine Form (42) unter Hitzeeinwirkung,
Erzeugen eines mechanischen Drucks in den Resonanzkörpern und seitliches Verformen des Distanzkörpers mittels eines in der Form (42) angeordneten Schiebers (48) und
Aushärten in der Form (42).

14. Verfahren nach Anspruch 13, das ferner den Verfahrensschritt des punktuellen, seitlichen und faserverdrängenden Durchstoßens der Hülle und des Distanzkörpers nach dem seitlichen Verformen des Distanzkörpers und vor oder während des Aushärtens umfaßt.

15. Verfahren nach Anspruch 14, bei dem die Hülle und der Distanzkörper in der Form mittels eines Doms (50) von einer Seite durchstoßen wird.

16. Verfahren nach Anspruch 14, bei dem zwei Dorne (50,52) von gegenüberliegenden Seiten durch die Hülle in den Distanzkörper gestoßen werden bis sich deren Stirnseiten im Distanzkörper berühren.

## Claims

1. Shaped body for making an item of sports equipment, especially a tennis racquet, squash racquet, badminton racquet, golf club, hockey stick, ice hockey stick or baseball bat, having two tubular resonant bodies (4, 6, 18, 20) which extend in parallel and are arranged spaced apart from one another and which are surrounded by a common covering (12, 26), and having a spacer body (8, 22) which is arranged between the resonant bodies (4, 6, 18, 20),
**characterized in that** the mass of each resonant body (4, 6, 18, 20) is greater than the mass of the spacer body (8, 22) and the compressive strength of the spacer body (8, 22) is at its greatest in the direction of an axis (10, 24) joining the centre points of the resonant bodies (4, 6, 18, 20).

2. Shaped body for making an item of sports equipment according to claim 1, **characterized in that** the spacer body (8, 22) consists of wood or a wood-like material.

3. Shaped body for making an item of sports equipment according to claim 2, **characterized in that** the spacer body (8, 22) is made of balsawood.

4. Shaped body for making an item of sports equipment according to any one of claims 1 to 3, **characterized in that** the width (B₁, B₂) of the resonant bodies (4, 6, 18, 20) is greater than the width (A) of the spacer body (8, 22).

5. Shaped body for making an item of sports equipment according to any one of claims 1 to 4, **characterized in that** the covering (26) has a greater wall thickness on the side (18", 20") of the resonant body (18, 20) remote from the opposite resonant body (20, 18).

6. Shaped body for making an item of sports equipment according to any one of claims 1 to 5, **characterized in that** the covering (26) is formed of one or more layers of at least two plastics-impregnated sheet materials (28, 30).

7. Shaped body for making an item of sports equipment according to claim 6, **characterized in that** the covering (26), on the side (18", 20") of the resonant body (18, 20) remote from the opposite resonant body (20, 18), has in each case first portions (26') which are connected by way of two second portions (26"), the sheet materials (30) of the first portions (26') being arranged to overlap the sheet materials (28) of the second portions (28) in the transition region (32).

8. Shaped body for making an item of sports equipment according to claim 7, **characterized in that** the sheet materials (30) in the first portions (26') of the covering (26) are thicker than the sheet materials (28) in the second portions (26") of the covering (26) and/or that more sheet material (30) is arranged in the first portions (26') than in the second portions (26").

9. Shaped body for making an item of sports equipment according to either one of claims 7 and 8, **characterized in that** the plastics-impregnated sheet material (28, 30) consists of GFP, AFP, CFP, KFP, MFP fibre-reinforced plastics with a resin matrix or of other layers, fabrics or foils of metal or plastics that are able to absorb external forces.

10. Shaped body for making an item of sports equipment according to any one of claims 1 to 9, **characterized in that** the spacer body (8, 22) and the covering (12, 26) are provided laterally with through-openings (14), especially for the strings of stringing.

11. An item of sports equipment, especially a tennis racquet, squash racquet, badminton racquet, golf club, hockey stick, ice hockey stick or baseball bat, having a shaped body (2,16) according to any one of claims 1 to 10.

12. Tennis racquet having a handle and a frame according to claim 11, in which a shaped body (2, 16) forming the frame and/or the handle has, inside at least one resonant body (18, 20), freely movable mass particles or fluid droplets which damp recoil forces and vibrations acting on the shaped body, or alternatively has on the wall of at least one resonant body (18, 20) a mass support strip or a plurality of mass support strips (36) for kinetically active damping mass systems.

13. Process for the production of a shaped body for an item of sports equipment, especially a tennis racquet, squash racquet, badminton racquet, golf club, hockey stick, ice hockey stick or baseball bat, having the following process steps:
arranging two tubular resonant bodies in parallel, with a spacer body being arranged therebetween, the spacer body being oriented so that the direction of greatest compressive strength of the spacer body runs parallel to an axis joining the centre points of the resonant bodies,
applying plastics-impregnated sheet materials which only partially surround the resonant bodies and the spacer body, each individual sheet material being arranged to overlap another sheet material only in the region of the side of the resonant body remote from the respective opposite resonant body,
introduction into a mould (42) with the application of heat,
generating a mechanical pressure in the resonant bodies and laterally deforming the spacer body by means of a slider (48) arranged in the mould (42) and
hardening in the mould (42).

14. Process according to claim 13, which further comprises the process step of making lateral piercings at points on the covering and the spacer body, the piercings displacing the fibres, after the spacer body has been laterally deformed and before or during hardening.

15. Process according to claim 14, in which the covering and the spacer body is pierced from one side in the mould by means of a spike (50).

16. Process according to claim 14, in which two spikes (50, 52) are pushed through the covering into the spacer body from opposite sides until their ends meet inside the spacer body.

## Revendications

1. Corps profilé pour la production d'un article de sport, en particulier d'une raquette de tennis, de squash, de badminton, d'un club de golf, d'une crosse de hockey sur glace et d'une butte de base-ball, avec deux corps de résonance: (4, 6, 18, 20) tubulaires s'étendant parallèlement qui sont disposés à distance l'un de l'autre et sont entourés par une enveloppe commune (12, 26), et avec un corps d'écartement (8, 22) qui est disposé entre les corps de résonance (4, 6, 18, 20), **caractérisé en ce que** la masse de chaque corps de résonance (4, 6, 18, 20) est supérieure à la masse du corps d'écartement (8, 22) et la résistance à la pression du corps d'écartement (8, 22) est la plus grande dans la direction d'un axe (10, 24) reliant les centres des cops de résonance (4, 6, 18, 20).

2. Corps profilé pour la production d'un article de sport selon la revendication 1, **caractérisé en ce que** le corps d'écartement (8, 22) est composé de bois ou d'un autre matériau ligneux.

3. Corps profilé pour la production d'un article de sport selon la revendication 2, **caractérisé en ce que** le corps d'écartement (8, 22) est composé de bois de balsa.

4. Corps profilé pour la production d'un article de sport selon l'une quelconque des revendications 1 à 3, **caractérisé en ce que** la largeur (B₁, B₂) des corps de résonance (4, 6, 18, 20) est supérieure à la largeur (A) du corps d'écartement (8, 22).

5. Corps profilé pour la production d'un article de sport selon l'une quelconque des revendications 1 à 4, **caractérisé en ce que** l'enveloppe (26) présente une épaisseur de paroi supérieure sur le côté (18", 20") du corps de résonance (18, 20) qui fait face au corps de résonance (20, 18) opposé.

6. Corps profilé pour la production d'un article de sport selon l'une quelconque des revendications 1 à 5, **caractérisé en ce que** l'enveloppe (26) est formée d'une ou de plusieurs couches d'au moins deux matériaux de surface (28, 30) imprégnés de matière synthétique.

7. Corps profile pour la production d'un article de sport selon la revendication 6, **caractérisé en ce que** l'enveloppe (26) présente sur le côté (18", 20") du corps de résonance (18, 20) qui fait face au corps de résonance (20, 18) opposé, chaque fois des premières sections (26') qui sont reliées par le biais de deux secondes sections (26"), les matériaux de surface (30) des premières sections (26') étant disposés se chevauchant avec les matériaux de surface (28) des secondes sections (28) dans la zone de transition (32).

8. Corps profilé pour la production d'un article de sport selon la revendication 7, **caractérise en ce que** les matériaux de surface (30) des premières sections (26') de l'enveloppe (26) sont plus épais que les matériaux de surface (28) des secondes sections (26") de l'enveloppe (26) et/ou **en ce que** davantage do matériaux de surface (30) sont disposés dans les premières sections (26') que dans les secondes sections (26").

9. Corps profilé pour la production d'un article de sport selon l'une quelconque des revendications 7 ou 8, **caractérisé en ce que** le matériau de surface imprégné de matière synthétique (28, 30) est composé de matière synthétique renforcée de fibres de verre, d'aramide, de carbone, do charbon, de métal avec une matrice de résine ou d'autres couches, tissus ou feuilles de métal ou en matière synthétique qui peuvent intercepter les forces extérieures.

10. Corps profilé pour la production d'un article de sport selon l'une quelconque des revendications 1 à 9, **caractérisé en ce que** dans le corps d'écartement (8, 22) et dans l'enveloppe (12, 26) sont prévus des évidements (14) traversant latéralement, notamment pour les cordes d'un cordage.

11. Article de sport, en particulier raquette de tennis, do squash, de badminton, club de golf, crosse de hockey sur glace et batte de base-ball, qui présente un corps profilé (2, 16) selon l'une quelconque des revendications 1 à 10.

12. Raquette de tennis avec un manche et un cadre selon la revendication 11, pour laquelle un corps profilé (2, 16) formant le cadre et/ou le manche présente au sein d'au moins un corps de résonance (18, 20) des petites masses pouvant être déplacées librement ou des gouttes de liquide qui amortissent des forces de recul et des vibrations agissant sur le corps profilé, ou en variante une bande porteuse do masses ou plusieurs bandes porteuses de masse (36) pour des systèmes de masse d'amortissement, à action cinétique sur la paroi d'au moins un corps de résonance (18, 20).

13. Procédé de fabrication d'un corps profilé pour un article de sport, en particulier une raquette de tennis, de squash, de badminton, un club de golf, une crosse de hockey sur glace et une batte de base-ball, présentant les étapes de procédé consistant à
disposer parallèlement deux corps de résonance tubulaires en intercalant un corps d'écartement, le corps d'écartement étant orienté de telle sorte que la direction de la résistance à la pression la plus élevée du corps d'écartement s'étende parallèlement à un axe reliant les centres des corps de résonance.
appliquer des matériaux de surface imprégnés de matière synthétique qui n'entourent les corps de résonance et le corps d'écartement que partiellement, chaque matériau de surface individuel étant disposé se chevauchant avec un autre matériau de surface uniquement dans la zone du côté des corps do résonance qui fait face au corps de résonance opposé respectif,
introduire le corps profilé dans une forme (42) sous l'effet de la chaleur,
générer une pression mécanique dans les corps de résonance et déformer latéralement le corps d'écartement au moyen d'un coulisseau (48) disposé dans la forme (42) et durcir le corps profité dans la forme (42).

14. Procédé selon la revendication 13 qui comprend en outre l'étape de procédé consistant à percer ponctuellement, latéralement en remplaçant les fibres. l'enveloppe et le corps d'écartement après la déformation litérale du corps d'écartement et avant ou pendant le durcissement.

15. Procédé selon la revendication 14, dans lequel l'enveloppe et le corps d'écartement sont percés d'un côté dans la forme au moyen d'une épine (50).

16. Procédé selon la revendication 14, dans lequel deux épines (50, 52) transpercent par des côtés opposés l'enveloppe dans le corps d'écartement jusqu'à ce que leurs faces avant se touchent dans le corps d'écartement.
